(19) Europäisches Patentamt
European Patent Office
Office européen des brevets

(11) **EP 3 740 783 B1**

(12) **EUROPÄISCHE PATENTSCHRIFT**

(45) Veröffentlichungstag und Bekanntmachung des Hinweises auf die Patenterteilung:
**24.05.2023  Patentblatt 2023/21**

(21) Anmeldenummer: **18804290.7**

(22) Anmeldetag: **15.11.2018**

(51) Internationale Patentklassifikation (IPC):
**G01S 13/58** (2006.01)    **G01S 13/93** (2020.01)
**G01S 13/46** (2006.01)    **G01S 13/931** (2020.01)

(52) Gemeinsame Patentklassifikation (CPC):
**G01S 13/46; G01S 13/58;** G01S 2013/932

(86) Internationale Anmeldenummer:
**PCT/EP2018/081482**

(87) Internationale Veröffentlichungsnummer:
**WO 2019/141407 (25.07.2019 Gazette 2019/30)**

(54) **VERFAHREN UND VORRICHTUNG ZUR BEWERTUNG EINER WINKELPOSITION EINES OBJEKTS, UND FAHRERASSISTENZSYSTEM**

METHOD AND DEVICE FOR DETERMINING AN ANGULAR POSITION OF AN OBJECT, AND DRIVER ASSISTANCE SYSTEM

PROCÉDÉ ET DISPOSITIF D'ÉVALUATION DE LA POSITION ANGULAIRE D'UN OBJET ET SYSTÈME D'AIDE AU CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2018  DE 102018200752**

(43) Veröffentlichungstag der Anmeldung:
**25.11.2020  Patentblatt 2020/48**

(73) Patentinhaber: **Robert Bosch GmbH**
**70442 Stuttgart (DE)**

(72) Erfinder: **LOESCH, Benedikt**
**70195 Stuttgart (DE)**

(56) Entgegenhaltungen:
**EP-A1- 3 239 737        EP-A1- 3 267 217**
**US-A1- 2011 068 970**

## Beschreibung

Die vorliegende Erfindung betrifft ein Verfahren zur Bewertung einer Winkelposition eines anhand von Radardaten erkannten Objekts sowie eine entsprechende Vorrichtung. Die Erfindung betrifft weiterhin Fahrerassistenzsystem für ein Fahrzeug.

Stand der Technik

Neben der Berechnung von Abständen und Relativgeschwindigkeiten können auch Azimutwinkel und Elevationswinkel von Objekten anhand von Radardaten bestimmt werden. Diese Messgrößen können von Fahrerassistenzsystemen zur Steuerung bestimmte Fahrzeugfunktionen ausgewertet werden. Anhand des Elevationswinkels kann weiter erkannt werden, ob ein Objekt überfahrbar, gegenfahrbar oder unterfahrbar ist. Insbesondere zur Fahrspurzuordnung von Objekten müssen die Winkel des Objekts genau bestimmt werden. Aus der EP 3 267 217 A1 ist eine Radarvorrichtung zum Bestimmen von Objekten bekannt, wobei eine Gruppierung erfolgt.

Neben konventionellen Radarvorrichtungen sind Multiple-Input-Multiple-Output (MIMO)-Radarvorrichtungen bekannt, welche eine Vielzahl von Sendeantennen und Empfangsantennen aufweisen. Bei vergrößerter virtueller Apertur des Gesamtarrays und größerer Anzahl an Messungen können gleichzeitig die Kosten für zusätzliche Kanäle und Platz auf der Platine eingespart werden.

Um orthogonale Sendesignale zu erhalten, können Codemultiplex-, Frequenzmultiplex- oder Zeitmultiplexverfahren zum Einsatz kommen.

Aus der US 20170131392 A1 ist ein MIMO-Radarsensor bekannt, wobei in einem FMCW-Modulationsverfahren in verschachtelte Weise Frequenzrampen ausgesendet werden und die Reflexionen empfangen werden. Der Radarsensor erleichtert die Bestimmung der Winkelposition eines Objekts.

Insbesondere bei großen Winkelbereichen und einer hohen Objektauflösung, welche auch die Detektion schwächerer Ziele ermöglicht, kann der Berechnungsaufwand für die Winkelschätzung jedoch bedeutend sein. Es besteht daher Bedarf an effizienteren Methoden zur Winkelschätzung.

Offenbarung der Erfindung

Die Erfindung betrifft ein Verfahren zur Bewertung einer Winkelposition eines anhand von Radardaten erkannten Objekts mit den Merkmalen des Patentanspruchs 1 und eine Vorrichtung zur Bewertung einer Winkelposition eines anhand von Radardaten erkannten Objekts mit den Merkmalen des Patentanspruchs 8.

Gemäß einem ersten Aspekt betrifft die Erfindung demnach ein Verfahren zur Bewertung einer Winkelposition eines anhand von Radardaten erkannten Objekts, wobei die Radardaten von einer Radarvorrichtung ermittelt werden. Eine Eigengeschwindigkeit der Radarvorrichtung wird ermittelt. Weiter wird eine Relativgeschwindigkeit des erkannten Objekts mit Bezug zur Radarvorrichtung unter Verwendung der ermittelten Radardaten ermittelt. Mindestens ein Winkelprüfbereich wird unter Verwendung der ermittelten Eigengeschwindigkeit und der ermittelten Relativgeschwindigkeit ermittelt, wobei der mindestens eine Winkelprüfbereich möglichen unbeweglichen Objekten entspricht, welche eine Relativgeschwindigkeit aufweisen, die im Wesentlichen der ermittelten Relativgeschwindigkeit entspricht. Weiter wird ermittelt, ob ein Azimutwinkel des erkannten Objekts in dem ermittelten Winkelprüfbereich liegt.

Gemäß einem zweiten Aspekt betrifft die Erfindung demnach eine Vorrichtung zur Bewertung einer Winkelposition eines anhand von Radardaten erkannten Objekts. Die Vorrichtung weist eine Schnittstelle auf, welche die von einer Radarvorrichtung ermittelten Radardaten und Information bezüglich einer Eigengeschwindigkeit der Radarvorrichtung empfängt. Die Vorrichtung umfasst weiter eine Recheneinrichtung, welche eine Relativgeschwindigkeit des erkannten Objekts mit Bezug zur Radarvorrichtung unter Verwendung der ermittelten Radardaten ermittelt. Die Recheneinrichtung ermittelt mindestens einen Winkelprüfbereich unter Verwendung der ermittelten Eigengeschwindigkeit und der empfangenen Relativgeschwindigkeit. Der mindestens eine Winkelprüfbereich entspricht möglichen unbeweglichen Objekten, welche eine Relativgeschwindigkeit aufweisen, die im Wesentlichen der ermittelten

Relativgeschwindigkeit entspricht. Die Recheneinrichtung ermittelt weiter, ob ein Azimutwinkel des erkannten Objekts in dem ermittelten Winkelprüfbereich liegt.

Gemäß einem dritten Aspekt betrifft die Erfindung demnach ein Fahrerassistenzsystem für ein Fahrzeug, welches eine Radarvorrichtung aufweist, welche Radardaten ermittelt und anhand der Radardaten ein Objekt erkennt. Das Fahrerassistenzsystem umfasst weiter eine Vorrichtung zur Bewertung einer Winkelposition des erkannten Objekts.

Bevorzugte Ausführungsformen sind Gegenstand der jeweiligen Unteransprüche.

Vorteile der Erfindung

Der Erfindung liegt die Erkenntnis zugrunde, dass ein Großteil der mittels einer Radarvorrichtung eines Fahrzeugs erfassten Objekte statisch bzw. unbeweglich ist. Erfindungsgemäß wird daher zuerst überprüft, ob die empfangenen Radarsignale derartigen Standzielen entsprechen. Durch eine derartige Vorsuche kann der Rechenaufwand deutlich reduziert werden, da lediglich ein relativ schmaler Winkelbereich durchsucht werden muss. Lediglich, falls diese Vorsuche nicht erfolgreich ist, kann in zusätzlichen weiteren Winkelbereichen nach Objekten gesucht werden. Die Erfindung ermöglicht somit eine typischerweise deutlich schnellere Erfassung der Objekte bei reduziertem Rechenaufwand und dadurch reduziertem Energieverbrauch.

Gemäß einer bevorzugten Weiterbildung des Verfahrens wird unter Verwendung der Radardaten eine Winkelgüte berechnet, wobei ermittelt wird, dass der Azimutwinkel des erkannten Objekts in dem ermittelten Winkelprüfbereich liegt, falls die Winkelgüte einen vorgegebenen Schwellenwert überschreitet. Die Winkelschätzung selbst kann beispielsweise mittels eines deterministischen Maximum-Likelihood (DML)-Verfahrens durchgeführt werden. Die Winkelgüte kann dann durch folgende Gleichung definiert werden:

$$P_{corr,1-Ziel} = e^{-x} \cdot \sum_{k=0}^{m-2} \frac{x^k}{k!} \quad , \quad x := m \cdot \langle SNR \rangle \cdot (1 - DML)$$

Hierbei bezeichnet *DML* das Betragsquadrat der Kreuzkorrelation

$$\left| \underline{a}^H \underline{x} \right|^2$$

von Signalvektor und Antennendiagrammvektor. Weiter bezeichnet

$$P_{corr,1-Ziel}$$

die Wahrscheinlichkeit, dass der gemessene DML-Wert zu vollständig korrelierten Signal- und Antennendiagrammvektoren gehört. Ferner bezeichnet

$\langle SNR \rangle$

das mittlere Signal-zu-Rausch-Verhältnis nach kohärenter Integration über verschachtelte Modulationssequenzen, und *m* bezeichnet die Anzahl der Antennen der Radarvorrichtung, welche für die Winkelschätzung verwendet werden.

Falls die Winkelgüte bei der Vorsuche bereits gut genug ist, d. h. einen vorgegebenen Schwellenwert überschreitet, wird erkannt, dass die Radardaten stehenden Objekten zuzuordnen sind, sodass eine weitere globale Suche fallen kann. Bereits nach der Vorsuche kann dadurch die Winkelschätzung abgebrochen werden.

Falls die Winkelgüte den vorgegebenen Schwellenwert unterschreitet, kann gemäß einer bevorzugten Weiterbildung des Verfahrens ermittelt werden, dass der Azimutwinkel des erkannten Objekts nicht in dem ermittelten Winkelprüfbereich liegt. In diesem Fall erfolgt eine Ermittlung des Azimutwinkels außerhalb des Winkelprüfbereichs. Bei erfolgloser Vorsuche kann somit eine globale Suche anschließen. Dies betrifft Fälle, bei denen die Radardaten nicht Standzielen, sondern vielmehr beweglichen Zielen entsprechen.

Gemäß einer bevorzugten Weiterbildung des Verfahrens wird der mindestens eine Winkelprüfbereich anhand eines Montagewinkels der Radarvorrichtung bestimmt. Unter einem Montagewinkel kann ein in Fahrbahnebene gemessener Winkel zwischen der Hauptabstrahlrichtung der Radarvorrichtung und der Längsachse des Fahrzeugs bzw. Fahrtrichtung des Fahrzeugs verstanden werden.

Erfindungsgemäß wird der mindestens eine Winkelprüfbereich weiter unter Berücksichtigung einer Genauigkeit der ermittelten Eigengeschwindigkeit und/oder einer Genauigkeit der ermittelten Relativgeschwindigkeit ermittelt. Standziele weisen typischerweise eine genaue Beziehung von Relativgeschwindigkeit und Objektwinkel auf. Falls die Eigengeschwindigkeit des Fahrzeugs oder die Relativgeschwindigkeit jedoch nicht genau bekannt sind, ergeben sich entsprechende Toleranzbereiche, sodass die Winkelprüfbereiche eine gewisse Breite aufweisen. Die Winkelprüfbereiche selbst sind jedoch typischerweise deutlich kleiner als der gesamte Erfassungsbereich der Radarvorrichtung.

Gemäß einer bevorzugten Weiterbildung des Verfahrens wird mindestens ein Zentralwinkel berechnet, welcher einem möglichen unbeweglichen Objekt entspricht, welches eine Relativgeschwindigkeit aufweist, die gleich der ermittelten Relativgeschwindigkeit ist. Durch Variieren der ermittelten Eigengeschwindigkeit und ermittelten Relativgeschwindigkeit im Rahmen der Genauigkeit wird ein jeweiliger Winkelprüfbereich um den Zentralwinkel herum ermittelt. Der Zentralwinkel ist somit derjenige Winkel, welcher einem Objekt entspräche, welches sich exakt mit der gemessenen Relativgeschwindigkeit bewegt, wobei das Fahrzeug sich ebenfalls exakt mit der Eigengeschwindigkeit bewegt. Aufgrund der Ungenauigkeiten der Eigengeschwindigkeit und der Relativgeschwindigkeit ergibt sich die angesprochene Auffächerung in jeweilige Winkelprüfbereiche.

Gemäß einer bevorzugten Weiterbildung des Verfahrens werden überlappende Winkelprüfbereiche zu einem Gesamtwinkelprüfbereich kombiniert.

Gemäß einer bevorzugten Weiterbildung des Verfahrens erfolgt das Ermitteln, ob der Azimutwinkel des erkannten Objekts in dem ermittelten Winkelprüfbereich liegt, anhand eines Maximum-Likelihood-Verfahrens.

Kurze Beschreibung der Zeichnungen

Es zeigen:

Figur 1 ein schematisches Blockschaltbild einer Vorrichtung zur Bewertung einer Winkelposition gemäß einer Ausführungsform der Erfindung;

Figur 2 eine erste mögliche relative Positionierung von Radarvorrichtung und einem möglichen Objekt in Abhängigkeit einer gemessenen Relativgeschwindigkeit;

Figur 3 eine zweite mögliche relative Positionierung von Radarvorrichtung und einem möglichen Objekt in Abhängigkeit einer gemessenen Relativgeschwindigkeit;

Figur 4 eine Illustration entsprechender Winkelprüfbereiche;

Figur 5 ein schematisches Blockschaltbild eines Fahrerassistenzsystems gemäß einer Ausführungsform der Erfindung; und

Figur 6 ein Flussdiagramm eines Verfahrens zur Bewertung einer Winkelposition eines Objekts gemäß einer Ausführungsform der Erfindung.

In allen Figuren sind gleiche bzw. funktionsgleiche Elemente und Vorrichtungen mit denselben Bezugszeichen versehen.

Beschreibung der Ausführungsbeispiele

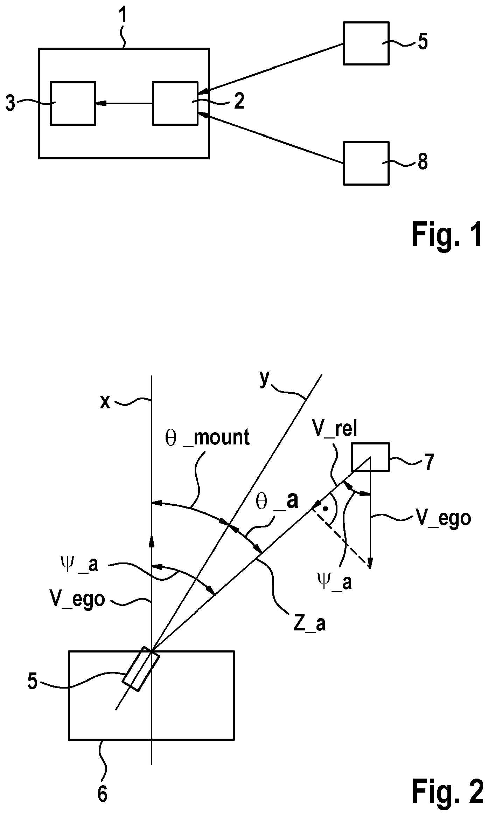

Figur 1 zeigt ein schematisches Blockschaltbild einer Vorrichtung 1 zur Bewertung einer Winkelposition eines Objekts, welches anhand von Radardaten erkannt wurde. Die Vorrichtung 1 umfasst eine Schnittstelle 2, welche mit einer Radarvorrichtung 5 eines Fahrzeugs gekoppelt ist, und von dieser Radardaten empfängt. Die Radarvorrichtung 5 ist vorzugsweise als MIMO-Radarvorrichtung ausgestaltet sein. Insbesondere kann die Radarvorrichtung in einem Zeitmultiplex-Verfahren unterschiedliche Frequenzrampen aussenden, etwa nach dem in der US 20170131392 A1 offenbarten Verfahren. Durch geschickte Wahl des Modulationsverfahrens kann eine eindeutige Bestimmung des Abstands und der Relativgeschwindigkeit des Objekts durchgeführt werden, ohne dass ein Tracking über mehrere Zyklen erforderlich wäre.

Die Schnittstelle 2 ist weiter mit einer Sensorvorrichtung 8 des Fahrzeugs gekoppelt, welche dazu ausgebildet ist, eine Eigengeschwindigkeit des Fahrzeugs zu messen. Die gemessene Eigengeschwindigkeit wird über die Schnittstelle 2 an die Vorrichtung 1 übertragen.

Die Vorrichtung 1 verfügt weiter über eine Recheneinrichtung 3, welche die über die Schnittstelle 2 empfangenen Daten weiter auswertet. Ein Objekt kann entweder von der Radarvorrichtung 5 oder von der Recheneinrichtung 3 anhand der Radardaten erkannt werden. Insbesondere werden hierzu Peaks in einem Frequenzspektrum ausgewertet. Die Recheneinrichtung 3 ermittelt anhand der Radardaten eine Relativgeschwindigkeit des erkannten Objekts relativ zum Fahrzeug bzw. zur Radarvorrichtung 5. Die Berechnung der Relativgeschwindigkeit kann anhand bekannter Verfahren unter Berücksichtigung des Dopplereffekts erfolgen.

Die Recheneinrichtung 3 hat weiter Kenntnis über einen Montagewinkel der Radarvorrichtung 5, welcher beispielsweise als vorgegebener Wert in einem Speicher der Vorrichtung 1 abgelegt sein kann.

Die Recheneinrichtung 3 ist dazu ausgebildet, zu überprüfen, ob es sich bei dem erkannten Objekt um ein Standziel handelt.

Bei fest vorgegebenen Werten des Montagewinkels, der Eigengeschwindigkeit des Fahrzeugs und der Relativgeschwindigkeit des Objekts ergeben sich zwei mögliche Winkelkonstellationen für die relative Lage zwischen Fahrzeug und Objekt.

Eine erste mögliche Lage ist in Figur 2 illustriert. Die Radarvorrichtung 5 ist in einem Fahrzeug 6 verbaut, wobei eine Hauptabstrahlrichtung Y der Radarvorrichtung 5 mit der Fahrzeugachse bzw. Längsachse X des Fahrzeugs 6 den Montagewinkel $\theta\_mount$ einschließt. Das Fahrzeug 6 bewegt sich mit der Eigengeschwindigkeit $v\_ego$ entlang der Fahrzeugachse X. Da es sich bei dem Objekt 7 um ein stationäres Ziel handelt, bewegt sich dieses im Koordinatensystem des Fahrzeugs 6 mit negative Eigengeschwindigkeit $- v\_ego$. Eine Projektion auf eine erste Verbindungslinie $Z\_a$ zwischen der Radarvorrichtung 5 und dem Objekt 7 entspricht der Relativgeschwindigkeit $v\_rel$. Die Hauptabstrahlrichtung Y schließt mit der ersten Verbindungslinie $Z\_a$ einen ersten Azimutwinkel $\theta\_a$ ein, wobei das Objekt 7 auf einer von der Achse X abgewandten Seite der Hauptabstrahlrichtung Y liegt. Ein erster Objektwinkel $\psi\_a$ des Objekts 7 zwischen der ersten Verbindungslinie Z_a und der Fahrzeugachse X ist somit gegeben als die Summe des Montagewinkels θ_mount und des ersten Azimutwinkels θ_a. Aus geometrischen Überlegungen ergibt sich, dass der erste Azimutwinkel θ_a gemäß folgender Formel berechnet werden kann:

$$\theta_a = \cos^{-1}\left(\frac{-v_{rel}}{v_{ego}}\right) - \theta_{mount}$$

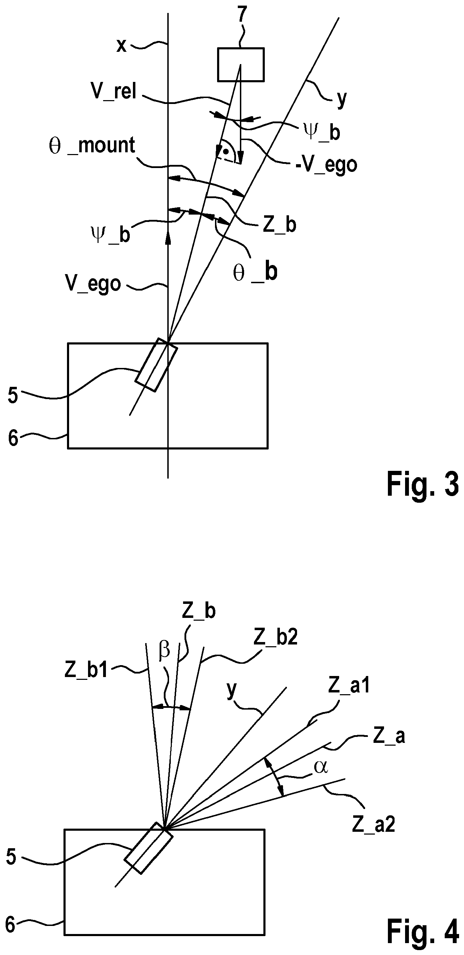

Eine zweite mögliche Situation ist in Figur 3 illustriert. In diesem Fall befindet sich eine zweite Verbindungslinie Z_b, welche das Objekt 7 mit der Radarvorrichtung 5 verbindet, zwischen der Hauptabstrahlrichtung Y und der Fahrzeugachse X. Ein zweiter Azimutwinkel θ_b zwischen der Hauptabstrahlrichtung Y und der zweiten Verbindungslinie Z_b ist gegeben als die Differenz zwischen dem Montagewinkel 0_mount und einem zweiten Objektwinkel ψ_b, d. h. durch folgende Formel:

$$\theta_b = -\left(\cos^{-1}\left(\frac{-v_{rel}}{v_{ego}}\right) - \theta_{mount}\right)$$

Gemäß einer Ausführungsform überprüft die Recheneinrichtung 3 zuerst, ob ein tatsächlicher Azimutwinkel des anhand der Radardaten erfassten Objekts 7 dem ersten Azimutwinkel θ_a oder dem zweiten Azimutwinkel θ_b entspricht.

Allgemeiner sind die Relativgeschwindigkeit v_rel und die Eigengeschwindigkeit v_ego des Fahrzeugs 6 mit Fehlern behaftet. Die Recheneinrichtung 3 überprüft daher gemäß weiterer Ausführungsformen, ob der tatsächliche Azimutwinkel des anhand der Radardaten erfassten Objekts 7 in einem ersten Winkelbereich α oder in einem zweiten Winkelbereich β liegt.

In Figur 4 sind die beiden Winkelbereiche illustriert. Der erste Winkelbereich α erstreckt sich zwischen einer ersten Achse Z_a1 und einer zweiten Achse Z_a2 um die erste Verbindungslinie Z_a herum. Die entsprechenden Azimutwinkel relativ zur Hauptabstrahlrichtung Y liegen zwischen einem ersten Wert:

$$\cos^{-1}\left(\frac{-v_{rel} + \sigma_{rel}}{v_{ego} - \sigma_{ego}}\right) - \theta_{mount}$$

und einem zweiten Wert:

$$\cos^{-1}\left(\frac{-v_{rel} - \sigma_{rel}}{v_{ego} + \sigma_{ego}}\right) - \theta_{mount}$$

Hierbei bezeichnet σ_rel die Unsicherheit der Relativgeschwindigkeit v_rel, während σ_ego die Unsicherheit der Eigengeschwindigkeit v_ego des Fahrzeugs 6 bezeichnet.

Entsprechend erstreckt sich der zweite Winkelbereich β erstreckt zwischen einer dritten Achse Z_b1 und einer vierten Achse Z_b2 um die zweite Verbindungslinie Z_b herum. Die entsprechenden Azimutwinkel relativ zur Hauptabstrahlrichtung Y liegen zwischen einem ersten Wert:

$$-\left(\cos^{-1}\left(\frac{-v_{rel} + \sigma_{rel}}{v_{ego} - \sigma_{ego}}\right) - \theta_{mount}\right)$$

und einem zweiten Wert:

$$-\left(\cos^{-1}\left(\frac{-v_{rel}-\sigma_{rel}}{v_{ego}+\sigma_{ego}}\right)-\theta_{mount}\right)$$

Für bestimmte Konstellationen können sich die beiden Winkelbereiche $\alpha$, $\beta$ überlappen. In diesem Fall werden die beiden Winkelbereiche $\alpha$, $\beta$ zu einem Gesamtwinkelbereich zusammengefasst.

Die Recheneinrichtung 3 ermittelt jeweils eine Winkelgüte, d. h. eine Größe, welche angibt, ob das Objekt 7 tatsächlich in dem jeweiligen Winkelbereich $\alpha$, $\beta$ liegt. Falls die Winkelgüte einen vorgegebenen Wert überschreitet, so stellt die Recheneinrichtung 3 fest, dass es sich bei dem Objekt 7 um ein Standziel handelt.

Andernfalls erkennt die Recheneinrichtung 3, dass es sich nicht um ein Standziel handelt und führt eine Winkelschätzung außerhalb der beiden Winkelbereiche $\alpha$, $\beta$ durch.

Unter einer Bewertung der Winkelposition kann somit einerseits verstanden werden, dass überprüft wird, ob es sich um eine Winkelposition eines stehenden Objektes handelt. Andererseits kann auch der genaue Azimutwinkel berechnet werden.

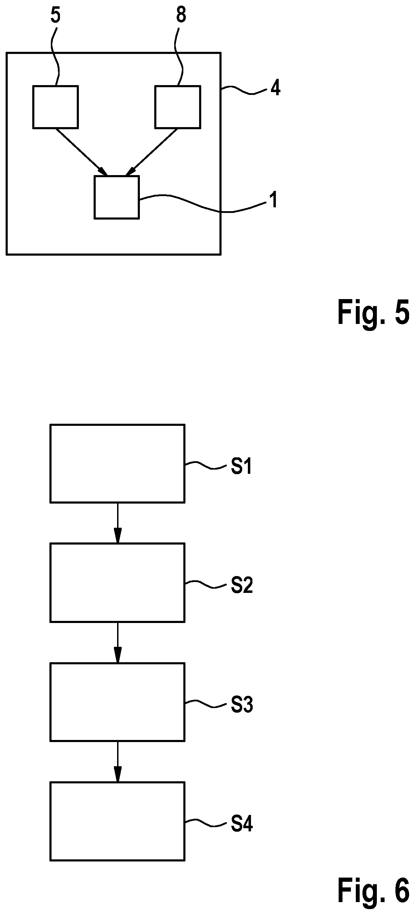

In Figur 5 ist ein schematisches Blockschaltbild eines Fahrerassistenzsystems 4 gemäß einer Ausführungsform der Erfindung illustriert. Das Fahrerassistenzsystem 4 weist eine Radarvorrichtung 5 auf, welche in dem Fahrzeug 6 installiert ist. Die Radarvorrichtung 5 übermittelt Radardaten und erkennt anhand der Radardaten ein Objekt 7. Das Fahrerassistenzsystem 4 weist weiter eine Vorrichtung 1 auf, welche die Winkelposition anhand der Radardaten bewertet.

In Figur 6 ist ein Flussdiagramm eines Verfahrens zur Bewertung einer Winkelposition eines Objekts 7 illustriert.

In einem Verfahrensschritt S1 wird eine Eigengeschwindigkeit v_ego der Radarvorrichtung 5 ermittelt. Insbesondere kann die Radarvorrichtung 5 in ein Fahrzeug 6 integriert sein, wobei die Eigengeschwindigkeit v_ego des Fahrzeugs 6 durch einen Geschwindigkeitssensor des Fahrzeugs 6 berechnet wird.

In einem Verfahrensschritt S2 wird eine Relativgeschwindigkeit v_rel des erkannten Objekts 7 mit Bezug zur Radarvorrichtung 5 unter Verwendung der ermittelten Radardaten bestimmt.

In einem weiteren Schritt S3 wird mindestens ein Winkelprüfbereich $\alpha$, $\beta$ in Abhängigkeit der Eigengeschwindigkeit v_ego, der Relativgeschwindigkeit v_rel und gegebenenfalls eines Montagewinkels $\theta$_mount der Radarvorrichtung 5 bestimmt. Der Winkelprüfbereich $\alpha$, $\beta$ entspricht möglichen unbeweglichen Objekten 7, wobei Ungenauigkeiten der Eigengeschwindigkeit v_ego und der Relativgeschwindigkeit v_rel nach den oben beschriebenen Vorgehensweisen berücksichtigt werden können.

In einem Verfahrensschritt S4 wird überprüft, ob ein Azimutwinkel des erkannten Objekts 7 in dem ermittelten Winkelprüfbereich $\alpha$, $\beta$ liegt.

## Patentansprüche

1. Verfahren zur Bewertung einer Winkelposition eines anhand von Radardaten erkannten Objekts (7), wobei die Radardaten von einer Radarvorrichtung (5) ermittelt werden, mit den Schritten:

   Ermitteln (S1) einer Eigengeschwindigkeit (v_ego) der Radarvorrichtung (5);
   Ermitteln (S2) einer Relativgeschwindigkeit (v_rel) des erkannten Objekts (7) mit Bezug zur Radarvorrichtung (5) unter Verwendung der ermittelten Radardaten;
   Ermitteln (S3) von mindestens einem Winkelprüfbereich ($\alpha$, $\beta$) unter Verwendung der ermittelten Eigengeschwindigkeit (v_ego) und der ermittelten Relativgeschwindigkeit (vrel), wobei der mindestens eine Winkelprüfbereich ($\alpha$, $\beta$) möglichen unbeweglichen Objekten (7) entspricht, welche eine Relativgeschwindigkeit (v_rel) aufweisen, die im Wesentlichen der ermittelten Relativgeschwindigkeit (v rel) entspricht; und
   Ermitteln (S4), ob ein Azimutwinkel des erkannten Objekts (7) in dem ermittelten Winkelprüfbereich ($\alpha$, $\beta$) liegt, **dadurch gekennzeichnet, dass** der mindestens eine Winkelprüfbereich ($\alpha$, $\beta$) weiter unter Berücksichtigung einer Genauigkeit der ermittelten Eigengeschwindigkeit (v_ego) und/oder einer Genauigkeit der ermittelten Relativgeschwindigkeit (v_rel) ermittelt wird.

2. Verfahren nach Anspruch 1, wobei das Ermitteln, ob der Azimutwinkel des erkannten Objekts (7) in dem ermittelten Winkelprüfbereich ($\alpha$, $\beta$) liegt, das Berechnen einer Größe unter Verwendung der Radardaten umfasst, wobei die Größe angibt, ob das erkannte Objekt (7) tatsächlich in dem ermittelten Winkelprüfbereich ($\alpha$, $\beta$) liegt, und wobei ermittelt wird, dass der Azimutwinkel ($\varphi$) des erkannten Objekts (7) in dem ermittelten Winkelprüfbereich ($\alpha$, $\beta$) liegt, falls die Größe einen vorgegebenen Schwellenwert überschreitet.

3. Verfahren nach Anspruch 2, wobei ermittelt wird, dass der Azimutwinkel des erkannten Objekts (7) nicht in dem

ermittelten Winkelprüfbereich ($\alpha$, $\beta$) liegt, und wobei eine Ermittlung des Azimutwinkels außerhalb des Winkelprüfbereichs ($\alpha$, $\beta$) erfolgt, falls die Größe den vorgegebenen Schwellenwert unterschreitet.

4. Verfahren nach einem der vorangehenden Ansprüche, wobei der mindestens eine Winkelprüfbereich ($\alpha$, $\beta$) weiter anhand eines Montagewinkels ($\theta\_mount$) der Radarvorrichtung (5) bestimmt wird.

5. Verfahren nach einem der vorangehenden Ansprüche, wobei mindestens ein Zentralwinkel berechnet wird, welcher einem möglichen unbeweglichen Objekt (7) entspricht, welches eine Relativgeschwindigkeit ($v\_rel$) aufweist, die gleich der ermittelten Relativgeschwindigkeit ($v\_rel$) ist, wobei durch Variieren der ermittelten Eigengeschwindigkeit ($v\_ego$) und ermittelten Relativgeschwindigkeit ($v\_rel$) im Rahmen der Genauigkeit ein jeweiliger Winkelprüfbereich ($\alpha$, $\beta$) um den mindestens einen Zentralwinkel herum ermittelt wird.

6. Verfahren nach Anspruch 5, wobei überlappende Winkelprüfbereiche ($\alpha$, $\beta$) zu einem Gesamtwinkelprüfbereich ($\alpha$, $\beta$) kombiniert werden.

7. Verfahren nach einem der vorangehenden Ansprüche, wobei das Ermitteln, ob der Azimutwinkel des erkannten Objekts (7) in dem ermittelten Winkelprüfbereich ($\alpha$, $\beta$) liegt, anhand eines Maximum-Likelihood-Verfahrens erfolgt.

8. Vorrichtung (1) zur Bewertung einer Winkelposition eines anhand von Radardaten erkannten Objekts (7), mit:

   einer Schnittstelle (2), welche dazu ausgebildet ist, die von einer Radarvorrichtung (5) ermittelten Radardaten und Informationen bezüglich einer Eigengeschwindigkeit ($v\_ego$) der Radarvorrichtung (5) zu empfangen; und einer Recheneinrichtung (3), welche dazu ausgebildet ist, eine Relativgeschwindigkeit (v rel) des erkannten Objekts (7) mit Bezug zur Radarvorrichtung (5) unter Verwendung der ermittelten Radardaten zu ermitteln, mindestens einen Winkelprüfbereich ($\alpha$, $\beta$) unter Verwendung der ermittelten Eigengeschwindigkeit ($v\_ego$) und der empfangenen Relativgeschwindigkeit ($v\_rel$) zu ermitteln, wobei der mindestens eine Winkelprüfbereich ($\alpha$, $\beta$) möglichen unbeweglichen Objekten (7) entspricht, welche eine Relativgeschwindigkeit ($v\_rel$) aufweisen, die im Wesentlichen der ermittelten Relativgeschwindigkeit ($v\_rel$) entspricht, und zu ermitteln, ob ein Azimutwinkel des erkannten Objekts (7) in dem ermittelten Winkelprüfbereich ($\alpha$, $\beta$) liegt, **dadurch gekennzeichnet, dass** die Recheneinrichtung (3) dazu ausgebildet ist, den mindestens einen Winkelprüfbereich ($\alpha$, $\beta$) weiter unter Berücksichtigung einer Genauigkeit der ermittelten Eigengeschwindigkeit ($v\_ego$) und/oder einer Genauigkeit der ermittelten Relativgeschwindigkeit ($v\_rel$) zu ermitteln.

9. Fahrerassistenzsystem (4) für ein Fahrzeug (6), mit

   einer Radarvorrichtung (5), welche dazu ausgebildet ist, Radardaten zu ermitteln und anhand der Radardaten ein Objekt (7) zu erkennen; und
   einer Vorrichtung (1) zur Bewertung einer Winkelposition des erkannten Objekts (7) nach Anspruch 8.

**Claims**

1. Method for assessing an angular position of an object (7) detected on the basis of radar data, wherein the radar data are ascertained by a radar device (5), comprising the steps of:

   ascertaining (S1) an intrinsic speed ($v\_ego$) of the radar device (5);
   ascertaining (S2) a relative speed ($v\_rel$) of the detected object (7) with respect to the radar device (5) using the ascertained radar data;
   ascertaining (S3) at least one angular test region ($\alpha$, $\beta$) using the ascertained intrinsic speed ($v\_ego$) and the ascertained relative speed ($v\_rel$), wherein the at least one angular test region ($\alpha$, $\beta$) corresponds to possible stationary objects (7) which have a relative speed ($v\_rel$) that substantially corresponds to the ascertained relative speed ($v\_rel$); and
   ascertaining (S4) whether an azimuth angle of the detected object (7) lies in the ascertained angular test region ($\alpha$, $\beta$),
   **characterized in that** the at least one angular test region ($\alpha$, $\beta$) is also ascertained while taking into account an accuracy of the ascertained intrinsic speed ($v\_ego$) and/or an accuracy of the ascertained relative speed ($v\_rel$).

2. Method according to Claim 1, wherein the ascertaining of whether the azimuth angle of the detected object (7) lies in the ascertained angular test region ($\alpha$, $\beta$) includes calculating a variable using the radar data, wherein the variable indicates whether the detected object (7) actually lies in the ascertained angular test region ($\alpha$, $\beta$), and wherein it is ascertained that the azimuth angle ($\varphi$) of the detected object (7) lies in the ascertained angular test region ($\alpha$, $\beta$) if the variable is above a predetermined threshold value.

3. Method according to Claim 2, wherein it is ascertained that the azimuth angle of the detected object (7) does not lie in the ascertained angular test region ($\alpha$, $\beta$), and wherein an ascertainment of the azimuth angle outside the angular test region ($\alpha$, $\beta$) takes place if the variable is below the predetermined threshold value.

4. Method according to one of the preceding claims, wherein the at least one angular test region ($\alpha$, $\beta$) is also determined on the basis of a mounting angle ($\theta\_mount$) of the radar device (5).

5. Method according to one of the preceding claims, wherein at least one central angle, which corresponds to a possible stationary object (7) that has a relative speed ($v\_rel$) equal to the ascertained relative speed ($v\_rel$), is calculated, wherein a respective angular test region ($\alpha$, $\beta$) around the at least one central angle is ascertained by varying the ascertained intrinsic speed ($v\_ego$) and the ascertained relative speed ($v\_rel$) within the limits of accuracy.

6. Method according to Claim 5, wherein overlapping angular test regions ($\alpha$, $\beta$) are combined to form an overall angular test region ($\alpha$, $\beta$).

7. Method according to one of the preceding claims, wherein the ascertaining of whether the azimuth angle of the detected object (7) lies in the ascertained angular test region ($\alpha$, $\beta$) takes place on the basis of a maximum likelihood method.

8. Device (1) for assessing an angular position of an object (7) detected on the basis of radar data, comprising:

   an interface (2) designed to receive the radar data ascertained by a radar device (5) and information relating to an intrinsic speed ($v\_ego$) of the radar device (5); and
   a computing device (3) designed to ascertain a relative speed ($v\_rel$) of the detected object (7) with respect to the radar device (5) using the ascertained radar data, to ascertain at least one angular test region ($\alpha$, $\beta$) using the ascertained intrinsic speed ($v\_ego$) and the received relative speed ($v\_rel$), wherein the at least one angular test region ($\alpha$, $\beta$) corresponds to possible stationary objects (7) which have a relative speed ($v\_rel$) that substantially corresponds to the ascertained relative speed ($v\_rel$), and to ascertain whether an azimuth angle of the detected object (7) lies in the ascertained angular test region ($\alpha$, $\beta$),
   **characterized in that** the computing device (3) is designed to ascertain the at least one angular test region ($\alpha$, $\beta$) while taking into account an accuracy of the ascertained intrinsic speed ($v\_ego$) and/or an accuracy of the ascertained relative speed ($v\_rel$).

9. Driver assistance system (4) for a vehicle (6), comprising

   a radar device (5) designed to ascertain radar data and to detect an object (7) on the basis on the radar data; and
   a device (1) for assessing an angular position of the detected object (7) according to Claim 8.

**Revendications**

1. Procédé d'évaluation d'une position angulaire d'un objet (7) détecté à l'aide de données radar, les données radar étant déterminées par un dispositif radar (5), ledit procédé comprenant les étapes suivantes :

   déterminer (S1) une vitesse propre ($v\_ego$) du dispositif radar (5) ;
   déterminer (S2) une vitesse relative ($v\_rel$) de l'objet détecté (7) par rapport au dispositif radar (5) à l'aide des données radar détectées ;
   déterminer (S3) au moins une plage angulaire de test ($\alpha$, $\beta$) à l'aide de la vitesse propre déterminée ($v\_ego$) et de la vitesse relative déterminée ($v\_rel$), l'au moins une plage angulaire de test ($\alpha$, $\beta$) correspondant à d'éventuels objets immobiles (7) qui ont une vitesse relative ($v\_rel$) qui correspond sensiblement à la vitesse relative déterminée ($v\_rel$) ; et
   déterminer (S4) si un angle d'azimut de l'objet détecté (7) se trouve dans la plage angulaire de test déterminée (α, β),

**caractérisé en ce que** l'au moins une plage angulaire de test (α, β) est déterminée avec prise en compte en outre d'une précision de la vitesse propre déterminée (v_ego) et/ou d'une précision de la vitesse relative déterminée (v_rel).

2. Procédé selon la revendication 1, l'étape visant à déterminer si l'angle d'azimut de l'objet détecté (7) se trouve dans la plage angulaire de test déterminée (α, β) comprenant le calcul d'une grandeur à l'aide des données radar, la grandeur indiquant si l'objet détecté (7) se trouve réellement dans la plage angulaire de test déterminée (α, β), et l'angle d'azimut (φ) de l'objet détecté (7) étant déterminé comme se trouvant dans la plage angulaire de test déterminée (α, β) si la grandeur dépasse une valeur de seuil prédéterminée.

3. Procédé selon la revendication 2, l'angle d'azimut de l'objet détecté (7) étant déterminé comme ne se trouvant dans la plage angulaire de test déterminée (α, β), et l'angle d'azimut étant déterminé comme se trouvant à l'extérieur de la plage angulaire de test (α, β) si la grandeur devient inférieure à la valeur de seuil prédéterminée.

4. Procédé selon l'une des revendications précédentes, l'au moins une plage angulaire de test (α, β) étant en outre déterminée sur la base d'un angle de montage (θ_montage) du dispositif radar (5).

5. Procédé selon l'une des revendications précédentes, au moins un angle au centre étant calculé qui correspond à un éventuel objet immobile (7) qui a une vitesse relative (v_rel) qui est égale à la vitesse relative déterminée (v_rel), une plage angulaire de test respective (α, β) autour de l'au moins un angle au centre étant déterminée dans le cadre de la précision par variation de la vitesse propre déterminée (v_ego) et de la vitesse relative déterminée (v_rel).

6. Procédé selon la revendication 5, des zones de test d'angle (α, β) qui se chevauchent étant combinées pour former une plage angulaire de test totale (α, β).

7. Procédé selon l'une des revendications précédentes, la détermination du fait que l'angle d'azimut de l'objet détecté (7) se trouve dans la plage angulaire de test déterminée (α, β) étant effectuée à l'aide d'un procédé de vraisemblance maximale.

8. Dispositif (1) d'évaluation d'une position angulaire d'un objet (7) détecté à l'aide de données radar, ledit dispositif comprenant :

   une interface (2) qui est conçue pour recevoir les données radar déterminées par un dispositif radar (5) et des informations relatives à une vitesse propre (v_ego) du dispositif radar (5) ; et
   un module informatique (3) qui est conçu pour déterminer une vitesse relative (v_rel) de l'objet détecté (7) par rapport au dispositif radar (5) à l'aide des données radar déterminées, déterminer au moins une plage angulaire de test (α, β ) à l'aide de la vitesse propre déterminée (v_ego) et de la vitesse relative reçue (v_rel), l'au moins une plage angulaire de test (α, β) correspondant à d'éventuels objets immobiles (7) qui ont une vitesse relative (v_rel) qui correspond sensiblement à la vitesse relative déterminée (v_rel), et déterminer si un angle d'azimut de l'objet détecté (7) se trouve dans la plage angulaire de test déterminée (α, β),
   **caractérisé en ce que** le module informatique (3) est conçu pour déterminer en outre au moins une plage angulaire de test (α, β) en tenant compte d'une précision de la vitesse propre déterminée (v_ego) et/ou d'une précision de la vitesse relative déterminée (v_rel).

9. Système d'assistance à la conduite (4) destiné à un véhicule (6), ledit système comprenant

   un dispositif radar (5) qui est conçu pour déterminer des données radar et pour détecter un objet (7) sur la base des données radar ; et
   un dispositif (1) d'évaluation d'une position angulaire de l'objet détecté (7) selon la revendication 8.

**Fig. 1**

**Fig. 2**

Fig. 3

Fig. 4

**Fig. 5**

**Fig. 6**

**EP 3 740 783 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3267217 A1

- US 20170131392 A1